Europäisches Patentamt

European Patent Office

Office européen des brevets

(11) Numéro de publication : **0 461 945 A1**

# (12) DEMANDE DE BREVET EUROPEEN

(21) Numéro de dépôt : **91401338.8**

(22) Date de dépôt : **24.05.91**

(51) Int. Cl.⁵ : **B62D 3/12**

(30) Priorité : **15.06.90 FR 9007488**

(43) Date de publication de la demande :
**18.12.91 Bulletin 91/51**

(84) Etats contractants désignés :
**DE ES GB IT**

(71) Demandeur : **REGIE NATIONALE DES USINES
RENAULT S.A.
34, Quai du Point du Jour
F-92109 Boulogne Billancourt Cédex (FR)**

(72) Inventeur : **Soba, Emile
153, rue Ordener
F-75018 Paris (FR)**

(54) Carter pour mécanisme de direction à pignon et crémaillère.

(57)    Carter pour direction à crémaillère et pignon, moulé en matériau plastique et comprenant en communication un logement longitudinal (2) pour recevoir la crémaillère (3) et un logement transversal (4) pour recevoir le pignon (5), caractérisé en ce que le logement longitudinal (2) comporte des surfaces (21), situées de part et d'autre de la zone de communication des deux logements (2, 4), ces surfaces formant butée étant destinées à être en contact direct avec la crémaillère (3) lorsque la crémaillère (3) est soumise à des chocs.

EP 0 461 945 A1

FIG 1

La présente invention concerne un carter pour mécanisme de direction à pignon et crémaillère, en particulier pour véhicule automobile.

Les carters pour mécanisme de direction à pignon et crémaillère connus, notamment décrit dans la publication FR 2.335.386, comportent un logement longitudinal et un logement transversal qui communiquent entre eux. le logement transversal reçoit un pignon monte en rotation au niveau de l'intersection avec le logement longitudinal. Le logement longitudinal reçoit une cremaillère montée de façon coulissante et en prise avec le pignon.

Les carters pour mécanisme de direction à pignon et crémaillère sont de plus adaptés pour recevoir des moyens destinés à assurer une liaison pignon-crémaillère en toute circonstance. En effet, pour obtenir un fonctionnement satisfaisant d'un mécanisme de direction à pignon crémaillère, sans vibration désagréable pour le conducteur, il est nécessaire de maintenir le pignon et la crémaillère en engrènement.

Cet engrènement doit avoir lieu nonobstant l'usure du pignon ou de la crémaillère, les jeux d'usinage entre ces organes, ainsi que la déformation en fonctionnement de la crémaillère soumise aux efforts engendrés par les irrégularités de la route.

Il a été proposé de nombreux dispositifs maintenant la crémaillère en engrènement avec le pignon. Ces dispositifs sont principalement de type poussoir comme décrit dans la publication FR 2 107 780.

Ces dispositifs comprennent des moyens élastiques qui pressent la crémaillère contre le pignon par l'intermédiaire d'un poussoir. La pression des moyens élastiques doit être soigneusement réglée pour ne pas rendre trop difficile la manoeuvre de la direction. Or sous l'action de fortes contraintes, par exemple suite à un choc, la crémaillère a tendance, du fait de l'inclinaison des flancs des dents, à s'éloigner du pignon, surmontant la charge des moyens élastiques. Par ailleurs les poussoirs en appui sur la crémaillère sont soumis à des efforts importants en cas de choc. Ce qui a pour effet d'user les poussoirs notamment pour mattage des surfaces en contact. Pour pallier cet inconvénient il est nécessaire de prévoir ou de coûteux renforts de structure ou de munir le dispositif poussoir de moyens permettant de corriger le jeu en accentuant la pression des moyens élastiques.

La présente invention a pour objet un carter pour mécanisme de direction à pignon et crémaillère, de type nouveau. Un tel carter, moule en matériau plastique intègre directement dans sa structure des surfaces d'appui en vue d'obtenir les avantages suivants:

- L'engrènement pignon crémaillère est réalisé même lorsque la crémaillère est soumise à des chocs violents.
- Les dispositifs formant poussoir peuvent être de conception simple.

Selon un premier mode de réalisation de l'invention, le carter, moulé en matériau plastique et comprenant en communication un logement longtitudinal pour recevoir la crémaillère et un logement transversal pour recevoir le pignon, est caractérisé en ce que le logement longitudinal comporte des surfaces situées de part et d'autre de la zone de communication des deux logements, ces surfaces formant butée, lorsque la crémaillère est soumise à des chocs.

Selon un deuxième mode de réalisation de l'invention, le carter, moulé en matériau plastique et comprenant un second logement transversal en communication avec le logement longitudinal pour recevoir des moyens formant poussoir, est caractérisé en ce que le poussoir fait partie intégrante du carter.

D'autres particularités et avantages de l'invention ressortiront plus clairement à la lecture de la description qui suit des modes de réalisations données à titre d'exemples non limitatifs en référence aux dessins annexes dans lesquels:

- La Figure 1 représente une vue en coupe longitudinale du carter seul selon le premier mode de réalisation.
- La figure 2 représente une vue en coupe selon la ligne II-II de la figure 1, du carter totalement équipé.
- La Figure 3 représente une vue en coupe transversale du carter selon le deuxième mode de réalisation.

Conformément aux dessins le carter comprend un corps (1) moulé en matériau plastique. A titre d'exemple, on peut utiliser un polyamide chargé à 50 % en fibre de verre.

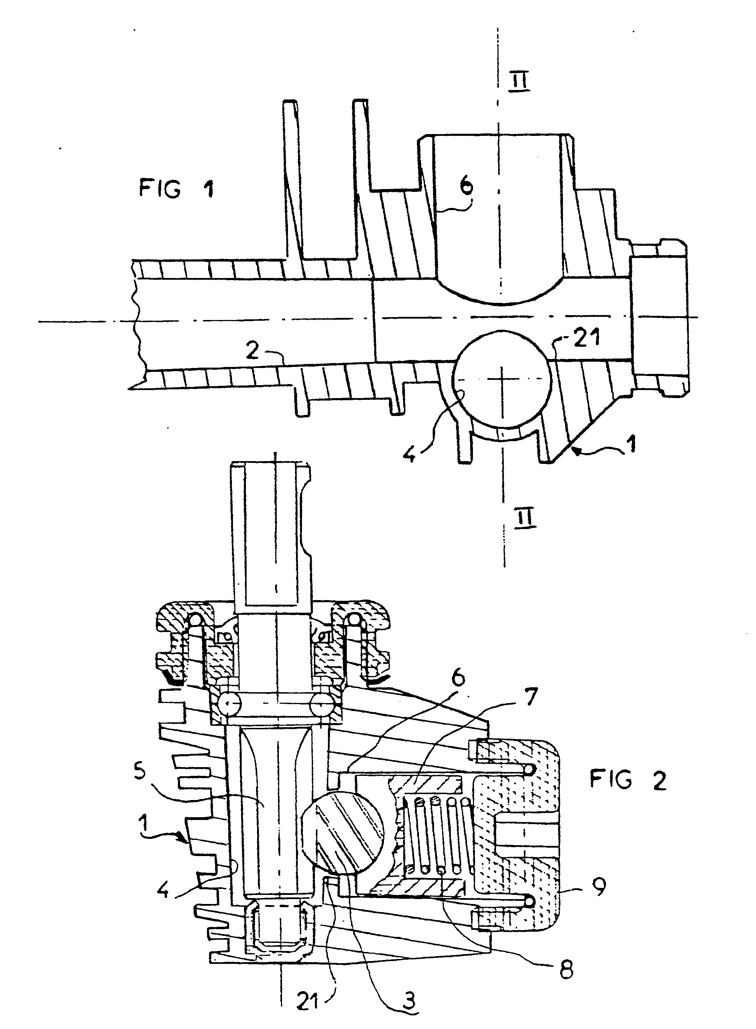

Conformément aux Figures 1 et 2, le corps (1) présente intérieurement un logement longitudinal (2) qui reçoit la crémaillère (3), un premier logement transversal (4) communiquant avec le logement (2) qui reçoit le pignon (5) et un second logement transversal (6) communiquant également avec le logement (2) qui reçoit des moyens formant poussoir. Le logement longitudinal (2) comporte des surfaces (21) qui s'étendent de part et d'autre de la zone de communication des logements (2) et (4).

Le carter (1) reçoit dans le logement (6) des moyens formant poussoir comprenant un poussoir (7) en engagement contre la crémaillère (3), du côté opposé aux dents. Le poussoir (7) est chargé par un ressort de rappel (8), le ressort (8) étant en appui par ailleurs contre un bouchon (9) vissé sur le carter (1). Le vissage du bouchon (9) permet de pouvoir ajuster la force à appliquer sur le poussoir (7) en comprimant plus ou moins fortement le ressort de rappel (8).

Ces surfaces (21), qui dans l'exemple illustré sont réunies et adjacentes à la zone de communication des logements (2) et (4) et (2) et (6), constituent une butée, destinée à être en contact direct 'avec la cremaillère (3). Lorsque cette dernière est soumise à des chocs, le dimensionnement de ces surfaces (21) est calcule de sorte que le jeu entre les surfaces (21) et la crémaillère (3) soit extrêmement réduit.

Compte tenu de la nature du matériau plastique utilise pour la fabrication du carter, il permet un fonctionnement sans grippage en cas de choc.

Par contre, la présence de la butée formée par les surfaces (21) entraîne plusieurs avantages. La cremaillère (3), même sous l'effet de chocs violents, a une amplitude de déplacement transversal restreinte et reste donc en engrènement avec le pignon (5). Par ailleurs, les caractéristiques élastiques du palier induit par le matériau plastique permettant d'amortir les efforts s'exerçant sur la crémaillère, limitant leur incidence sur le reste du système de direction.

Enfin le dispositif formant poussoir peut être de réalisation simple et peu coûteuse, car il n'a pas à résister aux fortes contraintes de la crémaillère (3). Son rôle est de corriger les éventuels jeux dûs à l'usure des pièces et surtout d'exercer une certaine résistance au déplacement de la crémaillère (3) de façon à durcir quelque peu la direction, ce qui est indispensable pour l'utilisation du véhicule à des vitesses élevées.

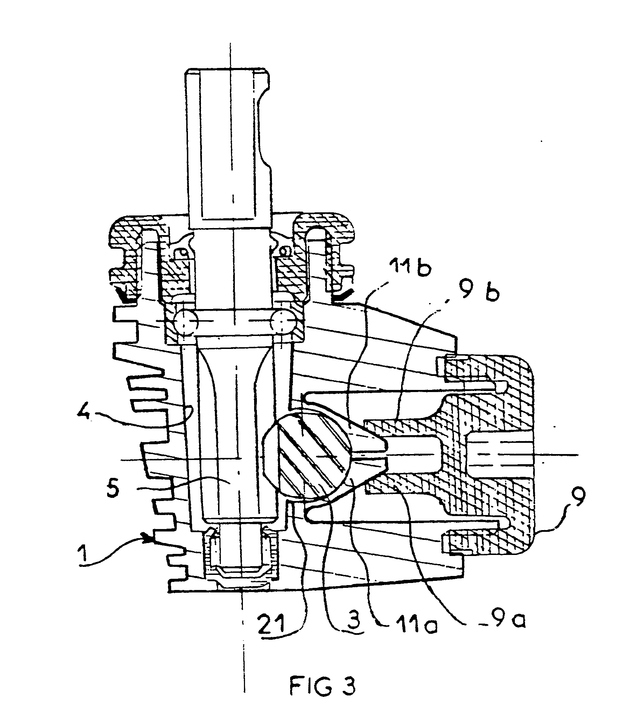

La figure 3 montre une variante du carter intégrant directement dans sa structure un poussoir. Une telle solution permet de réduire le nombre de pièces et donc de diminuer le temps de montage.

Le poussoir se présente sous la forme d'une pluralité de doigts (11a), (11b) moulés avec le carter (1). Les doigts (11a), (11b) s'étendent radialement depuis la surface intérieure du logement (6) et au voisinage de la zone d'intersection avec le logement (2). Les doigts (11a), (11b) ont une surface inférieure concave destinée à venir en appui sur la surface convexe de la crémaillère (3). Sur les extrémités libres des doigts (11a), (11b) regroupés sensiblement au voisinage de l'axe du logement (6), viennent s'appuyer les terminaisons flexibles (9a), (9b) du bouchon (9). Les terminaisons flexibles (9a), (9b) appuient élastiquement les doigts (11a), (11b) sur la crémaillère, la force exercée étant réglée par le vissage du bouchon (9).

## Revendications

1°) Carter pour direction à crémaillère et pignon, moulé en matériau plastique et comprenant en communication un logement longitudinal (2) pour recevoir la crémaillère (3) et un logement transversal (4) pour recevoir le pignon (5), caractérisé en ce que le logement longitudinal (2) comporte des surfaces (21), situées de part et d'autre de la zone de communication des deux logements (2, 4), ces surfaces formant butée étant destinées à être en contact direct avec la crémaillère (3) lorsque la crémaillère (3) est soumise à des chocs.

2°) Carter selon la revendication 1 caractérisé en ce que lesdites surfaces (21) sont adjacentes à la zone de communication des deux logements (2, 4) et s'étendent sur une longueur limitée.

3°) Carter selon l'une quelconque des revendications 1 à 2, comprenant un poussoir pour forcer la crémaillère (3) sur le pignon (5) caractérisé en ce que le poussoir fait partie intégrante du carter.

4°) Carter selon la revendication 3 caractérisé en ce que ledit poussoir est constitué par une pluralité de doigts flexibles (11a, 11b).

5°) Carter selon les revendications 3 ou 4 caractérisé en ce que lesdits moyens élastiques sont constitués par les terminaisons flexibles (9a), (9b) d'un bouchon (9) vissé sur le carter (1).

6°) Mécanisme de direction à pignon et crémaillère comprenant un carter selon l'une quelconque des revendications 1 à 5.

FIG 1

6

2

21

4

1

II

II

5

1

4

6

7

FIG 2

9

8

21

3

FIG 3

Office européen
des brevets

**RAPPORT DE RECHERCHE EUROPEENNE**

Numero de la demande

EP 91 40 1338

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 343 549 (KUNSTSTOFFVERARBEITUNG MÖSSNER GmbH) * En entier * | 1 | B 62 D 3/12 |
| A | US-A-4 008 627 (BRADSHAW) * En entier * | 1 | |
| D,A | FR-A-2 107 780 (CAM GEARS) * Revendications; figures * | 1 | |
| A | FR-A-2 192 939 (CAM GEARS) * Revendications; figures * | 1 | |

**DOMAINES TECHNIQUES RECHERCHES (Int. Cl.5)**

B 62 D
F 16 H

Le présent rapport a été établi pour toutes les revendications

| Lieu de la recherche | Date d'achèvement de la recherche | Examinateur |
|---|---|---|
| LA HAYE | 19-09-1991 | PIRIOU J.C. |